# EUROPEAN PATENT APPLICATION

(11) **EP 1 662 683 A1**
(43) Date of publication of application: **31.05.2006**
(21) Application number: 04425901.8
(22) Date of filing: 29.11.2004
(51) Int. Cl.: H04H 9/00

(54) **A method and a telecommunication network for supporting the delivery of polls and quiz related to TV programs to users of the telecommunication network**

(71) Applicant: Siemens Mobile Communications S.p.A., 20126 Milano (IT)
(72) Inventor: Morganti, Michele, 20136 Milano (IT); Pensy, Simone, 20090 Buccinasco (IT)
(74) Representative: Giustini, Delio

(57) **Abstract**

Is disclosed a method for supporting the delivery of polls and quiz related to TV programs to mobile users of a telecommunicammunication network adapted to connect said users to a broadcasting station, including the steps of:
a) subscribing the user to the service and defining the user profiles
b) registering the user to the service
c) the broadcaster announces the beginning of the TV program to which the poll / quiz is related to the subscribed user inviting them to participate to the poll / quiz.
d) the broadcaster submits the poll / quiz request to the end users subscribed and registered to the service
e) clicking on one of the available response option, the end user submits its response to the poll / quiz provider.

## Description

### Field of the Invention

The proposed solution aims at defining a method for the delivery to mobile subscribers of polls and quiz related to TV programmes, provided by TV broadcasters. The solution envisages three main actors.

The content provider (CP). Typically is a broadcaster aiming at submitting polls or quiz to a wide audience. The CP delivers content using the facilities made available from the service provider.

The service provider (SP). Typically is a telecom operator providing access to the service to its subscribers on one side, and to the content provider on the other side. The SP could be a third party, different from the TV broadcaster and from the telecom operator, like a traditional internet service provider or a solution provider, relying on telecom operator network.

The end user (EU). Typically is a subscriber of a telecom operator.

The method could be applied not only to mobile user, but also to subscribers of fixed operator as well as of TV broadcasters.

### Background art

Current solutions are based SMS or circuit switched calls technology. Polls and quiz are broadcasted during television programmes and user interacts sending an SMS to one or more message centres providing the service or calling a given number.

### Object and summary of the invention

The object of the present invention is thus to provide a method adapted to fully satisfactorily meet the requirements set forth in the foregoing.

According to the present invention, that object is achieved by means of a method for supporting the delivery of polls and quiz related to TV programs to mobile users of a telecommunicammunication network adapted to connect said users to a broadcasting station, including the steps of:
a) subscribing the user to the service and defining the user profiles
b) registering the user to the service
c) the broadcaster announces the beginning of the TV program to which the poll / quiz is related to the subscribed user inviting them to participate to the poll / quiz.
d) the broadcaster submits the poll / quiz request to the end users subscribed and registered to the service
e) clicking on one of the available response option, the end user submits its response to the poll / quiz provider.

It is also object of the present invention a telecommunication network adapted to implement said method.

### Brief Description of the Drawings

Fig. 1 shows an architectural solution, based on IMS
Fig. 2 depicts a sequence diagram of the four step envisaged for the solution [Figure 2]

### Detailed description of a preferred embodiment of the invention

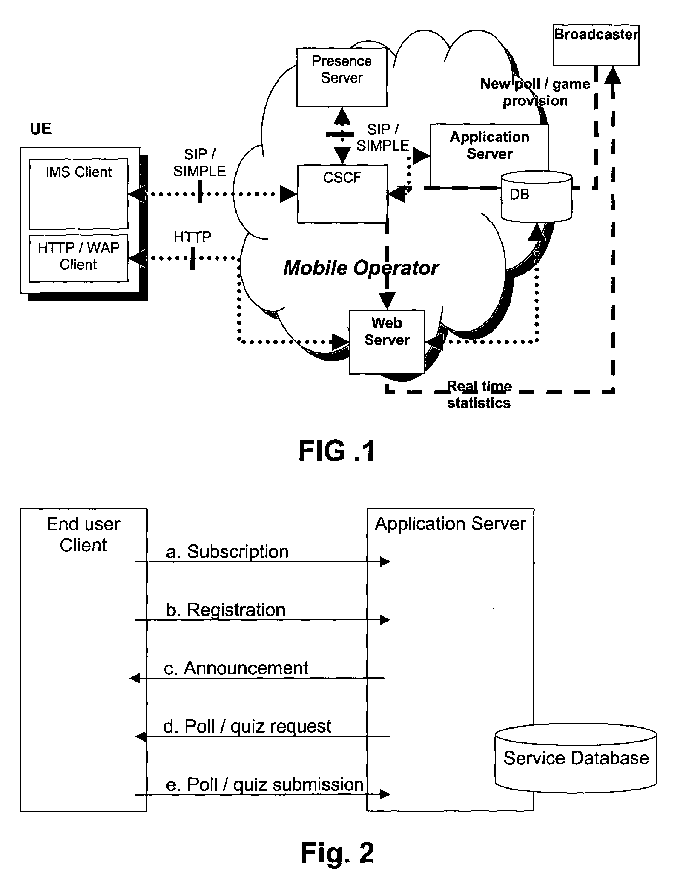

Figure 1 shows a telecommunication system supporting the method proposed in the invention. Such telecommunication system is composed by an end user device (EU) interacting with a set of network servers, featuring session control (CSCF), presence (Presence Server) and application (Application Server, Web Server, Database Server). The broadcaster interacts as content provider with the back end of the solution, providing the system with data (New poll /game provision) and retrieving data from the system (Real time statistics).

Figure 2 shows a sequence diagram for the proposed method.

The proposed solution is based on a packed switched architecture - IMS is quoted as sample architecture in the drawings - featuring presence, applications and database servers. The method is based on five steps:
a) User subscription and profiling: the user subscribes the service and defines its profiles, declaring its preferences. Such preferences could be the subscription to the polls / quiz provided by a single program or by a single TV channel or by the broadcaster. Subscriptions to multiple poll / quiz provider are also supported;
b) User registration to the service: starting the client application on its device, the subscriber of the service declares its availability to receive data from the poll / quiz provider. The registration could take place automatically at client start up or explicitly on user requests. In both the cases, the registration procedure requires the end user acknowledgement and a deregistration procedure should be supported.
c) Poll / quiz announcement: the broadcaster announces the beginning of the TV program to which the poll /quiz is related to the subscribed user inviting them to participate to the poll / quiz. The user can accept or decline the invitation. If user accepts the invitation, poll / quiz requests are as described in step 4; if the user declines the invitation, the broadcaster will not send poll / quiz requests to him.
d) Poll / quiz submission: the broadcaster submits the poll / quiz request to the end users subscribed and registered to the service. The submitted poll / quiz are delivered to the subscribers by the network infrastructure of the telecom operators offering the service. Requests are delivered only to registered user. The end user has the possibility to accept or decline the request. In case the end user accepts the request, the poll / quiz request is displayed in its device, reporting the poll provider - e.g. the broadcaster, the channel or the program according to the user preferences expressed during the subscription phase - the text of the poll / quiz and the available responses. In case the end user decline the request, he is asked if he whish to continue or to stop receiving messages for that TV program
e) Poll / quiz response: clicking on one of the available response option, the end user submits its response to the poll / quiz provider. Responses are stored for further analysis

Advantages are envisaged for all the actors reported in the solution.
- Content Provider (CP): the main advantage for the CP is that of having responses in real time and of reaching and pushing for responses a wide audience.
- Service Provider (CP): the SP increases its revenue, pushing users for additional traffic.
- End User (EU): end users experience such kind of services in an innovative way, having a rich and easy to use interface.

The solution also enables new value added services, such as prizing subscribers for participating to the poll / quiz.

While a particular embodiment of the present invention has been shown and described, it should be understood that the present invention is not limited thereto since other embodiments may be made by those skilled in the art.

One of this modification is to implement the method not on a mobile network as shown in Fig. 1 but on a fixed network, using e.g. a Personal Computer as enduser device.

## Claims

1. A method for supporting the delivery of polls and quiz related to TV programs to users of a telecommunication network adapted to supply to the users contents delivered by a broadcasting station, said method being **characterized in that** includes the steps of:
a) subscribing the user to the service and defining the user profiles;
b) registering the user to the service;
c) announcing the beginning of the TV program to which the poll / quiz is related to the subscribed user in order to invite them to participate to the poll / quiz;
d) submitting the poll / quiz request to the end users subscribed and registered to the service;
e) clicking on one of the available response option end user side in order to submit the response to the poll /quiz provider.

2. The Method of claim 1, **characterized in that** said step a) includes also the step of declaring, user side, of its preferences.

3. The method of claim 2, **characterized in that** said preferences includes the subscription to the polls / quiz provided by a single program or by a single TV channel or by the broadcaster.

4. The method of claim 2 **characterized in that** said preferences includes subscriptions to multiple poll / quiz provided by the provider.

5. The method of claim1, **characterized in that** said registering step b) includes also the step of starting the client application on its device, and the subscriber of the service declaring its availability to receive data from the poll / quiz provider.

6. The method of claim 5, **characterized in that** said registration take place automatically at client start up or explicitly on user requests.

7. The method of claim 6, **characterized in that** the registration procedure includes the end user acknowledgement.

8. The method of claim 1, **characterized in that** said step c) includes also the step to accept or decline the invitation.

9. The method of claim 8, charcaterized in that if user accepts the invitation, poll / quiz requests are as described in step e) and if the user declines the invitation, the broadcaster will not send poll / quiz requests to him.

10. The method of claim 1, **characterized in that** in said step d) said the submitted poll / quiz are delivered to the subscribers by the network infrastructure of the telecom operators offering the service.

11. The method of claim 1, **characterized in that** the requests are delivered only to registered user.

12. The method of claim 11, charcaterized in that the end user has the possibility to accept or decline the request.

13. The method of claim 12, **characterized in that** in case the end user accepts the request, the poll / quiz request is displayed in its device, reporting the poll provider.

14. The method of claim 12, **characterized in that** in case the end user decline the request, he is asked if he whish to continue or to stop receiving messages for that TV program.

15. The method of claim 1, **characterized in that** said step e) includes also the step of storing the responses for further analysis

16. A telecommunication network including at least a terminal equipment and a broadcasting station adapted to implement the method of claim 1.

17. A telecommunication network as claimed in claim 16, **characterized in that** said communication network is a mobile network.
